# EUROPEAN PATENT SPECIFICATION

(11) **EP 1 188 657 B1**
(45) Date of publication and mention of the grant of the patent: **06.06.2007**
(21) Application number: 01117391.1
(22) Date of filing: 18.07.2001
(51) Int. Cl.: B62K 25/28

(54) **Swing arm type suspension for vehicles**
Schwingende Hinterradfederung
Suspension oscillante de la roue arrière

(30) Priority: 05.09.2000 JP 2000268514
(43) Date of publication of application: 20.03.2002
(73) Proprietor: HONDA GIKEN KOGYO KABUSHIKI KAISHA, Tokyo (JP)
(72) Inventor: Gogo, Kazuhiko, 4-1 Chuo 1-chome, Wako-shi, Saitama (JP)
(74) Representative: Liska, Horst

(56) References cited:
- WO-A-00/12376
- DE-U- 29 909 988
- FR-A- 2 776 981
- US-A- 4 556 119

## Description

The present invention relates to a swing arm type suspension for vehicles suitable for enhancing the physical capability of the vehicle, increasing productivity, downsizing of a vehicle, and expanding the possibility of design of a vehicle body frame.

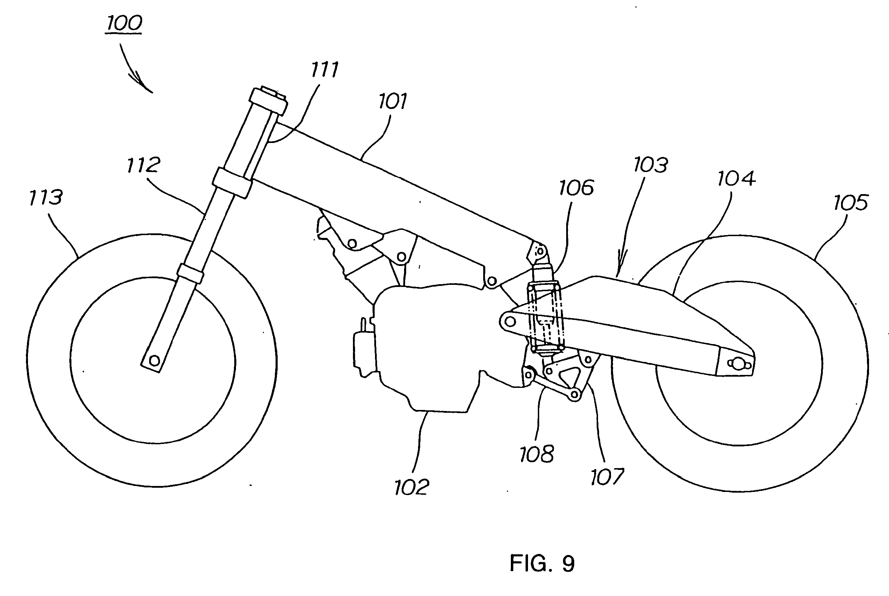

Fig. 9 is an explanatory drawing of a vehicle provided with a swing arm type suspension used in a related art, showing a state in which a power unit 102 comprising an engine and a change gear is mounted at the lower portion of the vehicle body frame 101 of the vehicle 100, and a swing arm type suspension 103 is disposed at the rear of the vehicle body frame 101 and the power unit 102.

The swing arm type suspension 103 is constructed in such a manner that a swing arm 104 is mounted at the rear of the power unit 102 so as to be capable of swinging motion, a rear wheel 105 is mounted at the rear end of the swing arm 104, one end of the cushion unit 106 is mounted at the rear portion of the vehicle body frame 101, a first linking member 107 mounted to the swing arm 104 is linked to the other end of the cushion unit 106, and a second linking member 108 mounted to the power unit 102 is linked to the first linking member 107. The reference numeral 111 designates a head pipe fixed at the front end of the vehicle body frame 101, the reference numeral 112 designates a front fork rotatably mounted to the head pipe 111, and the reference numeral 113 designates a front wheel.

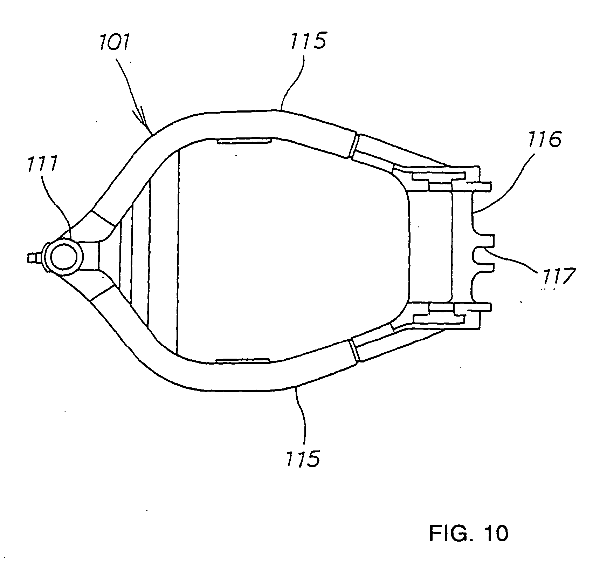

Fig. 10 is a plan view of the vehicle body frame of the related art, in which a vehicle body frame 101 comprises a pair of main frames 115, 115 on the left and the right extending backward from the head pipe 111, a cross beam 116 lying between the respective rear ends of the main frames 115, 115, and a mounting portion 117 provided on the cross beam 116 for mounting the upper end of the cushion unit 106 (See Fig. 9).

In the related art described above, the cross beam 116 is located in a space near the center of the vehicle body, which is suitable for disposing the fixtures such as a buttery and various electrical components. Therefore, by mounting the cross beam 116, the fixtures described above are required to be dispersed to other locations , and as a consequent, the weight is dispersed. When the fixtures are dispersed, the assembler has to move as he/she assembles those fixtures to the vehicle 100, which results in lowering of productivity. In addition, it may result in upsizing or the vehicle 100 or in limitation of the configuration of the vehicle body frame 101.

When the vehicle 100, in which one end of the cushion unit 106 is mounted to the rear portion of the vehicle body frame 101 and the other end of the cushion unit 106 is mounted to the swing arm 104 and the power unit 102 via the first and the second linking members 107, 108 respectively, is assembled in the production line, a subassembly that is assembled in advance by mounting the cushion unit 106, the first and the second linking members 107, 108, and the rear wheel 105 to the swing arm 104 in the sub-line is mounted to the vehicle body, that is, to a part of vehicle body frame 101 and the power unit 102. In this case, the respective ends of the swing arm 104, cushion unit 106, and the second linking member 108 of the subassembly are mounted to the vehicle body frame 101 and the power unit 102. However, since the ends of the cushion unit 106 and the second linking member 108 are not maintained their positioning with respect to the swing arm 104, the subassembly cannot be easily transported, and in addition, it cannot be easily handled when it is assembled to the power unit 102, thereby taking time in assembling the same.

DE-U-29909988 discloses a swing arm type suspension for vehicles in accordance with the preamble of claim 1.

US 4556119 discloses a swing arm type suspension for vehicles, wherein one end of the swing arm is mounted to the pivot shaft provided on the side of the vehicle body so as to be capable of swinging motion, a wheel is rotatably mounted to the other end of the swing arm, one end of the cushion unit is mounted to said vehicle body, and the other end of the cushion unit is mounted to a first linking member, wherein linked to the swing arm, and the first linking member is mounted to a second linking member linked to the side of the vehicle body.

Accordingly, it is an object of the present invention to provide a swing arm type suspension for vehicles in which the fixtures are concentrated to the central portion of the vehicle body to enhance the physical capability of the vehicle, increase productivity, downsize a vehicle, and expand the possibility of design of a vehicle body frame, and in which the subassembly assembled in the production line can easily be transported and the subassembly can easily be mounted to the vehicle body side.

In order to achieve the object described above, the invention according to Claim 1 provides a swing arm type suspension for vehicles, wherein one end of the swing arm is mounted to the pivot shaft provided on the vehicle body side so as to be capable of swinging motion, a wheel is rotatably mounted to the other end of the swing arm, one end of the cushion unit is mounted to the swing arm, the other end of the cushion unit is mounted to the first linking member linked to the swing arm, and the first linking member is mounted to the second linking member linked to the vehicle body side.

When assembling a vehicle in the production line, by assembling the cushion unit, the first and the second linking member, and the rear wheel to the swing arm as a subassembly in the sub-line, the both ends of the cushion unit can be positioned with respect to the swing arm. Therefore, to assemble the subassembly to the vehicle body side in the main line, the ends of the swing arm and the second linking member must simply be mounted to the vehicle body side. As a consequent, the subassembly can easily be handled during transportation or assembly in comparison with the swing arm type suspension of the related art, whereby the subassembly can be transported easily and assembled in a simple manner.
Fig. 1 is a side view of the vehicle provided with a swing arm type suspension (the first embodiment) according to the present invention.
Fig. 2 is a side view showing a principal portion of the swing arm type suspension (the first embodiment) according to the present invention.
Fig. 3 is a first explanatory drawing showing an action of the swing arm type suspension (the first embodiment) according to the present invention.
Fig. 4 is a second explanatory drawing showing an action of the swing arm type suspension (the first embodiment) according to the present invention.
Fig. 5 is a graph showing the relation between the amount of displacement of the rear wheel axle and the stroke length of the cushion unit in the swing arm type suspension (the first embodiment) according to the present invention.
Fig. 6 is a side view of the principal portion of the swing arm type suspension (the second embodiment) not covered by the enclosed claim.
Fig. 7 is a side view of the principal portion of the swing arm type suspension (the third embodiment) according to the present invention.
Fig. 8 is a side view of the principal portion of the swing arm type suspension (the fourth embodiment) not covered by the enclosed claim.
Fig. 9 is an explanatory drawing of the vehicle provided with a swing arm type suspension of the related art.
Fig. 10 is a plan view of the vehicle body frame of the related art.

Referring now to the attached drawings, the embodiments of the present invention will be described below. The drawings are to be oriented in such a manner that the reference numerals and signs are viewed in the right way.

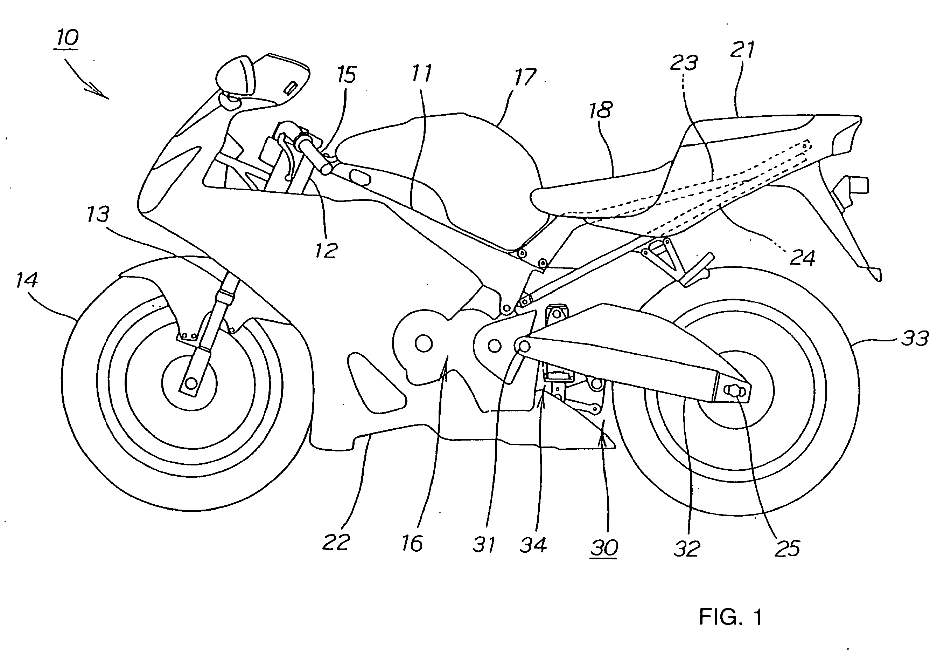

Fig. 1 is a side view of a vehicle provided with a swing arm type suspension according to the present invention (the first embodiment), in which the motorbike 10 is a vehicle comprising a main frame 11, a front fork 13 and a front wheel 14 mounted on a head pipe 12 fixed to the front end of the main frame 11 so as to be capable of steerage, a handle 15 mounted on the upper portion of the front fork 13, a power unit 16 including an engine and a change gear mounted at the lower portion of the main frame 11 as a part of the vehicle body, a swing arm type suspension 30 according to the present invention mounted at the rear of the power unit 16, a fuel tank 17 mounted above the main frame 11, and seats 18, 21 disposed at the rear of the fuel tank 17. The reference numeral 22 designates a cowling, the reference numerals 23 and 24 designate a seat frame and a sub frame extending from the rear portion of the main frame 11 diagonally upward toward the rear respectively, and the reference numeral 25 is a rear wheel axle.

The swing arm type suspension 30 is constructed in such a manner that a pivot shaft 31 is provided at the rear portion of the power unit 16, a swing arm 32 to the pivot shaft 31 is mounted at the front end thereof so as to be capable of swinging motion, a rear wheel 33 is mounted at the rear end of the swing arm 32 as a wheel, the upper end of a cushion unit 34 is mounted to the swing arm 32 at the position in the vicinity of the pivot shaft 31 for absorbing a shock to prevent the shock from being transmitted to the vehicle body via the rear wheel 33 and the swing arm 32, and the lower end of the cushion unit 34 is mounted to the lower portion of the power unit 32 via the linking mechanism (described later).

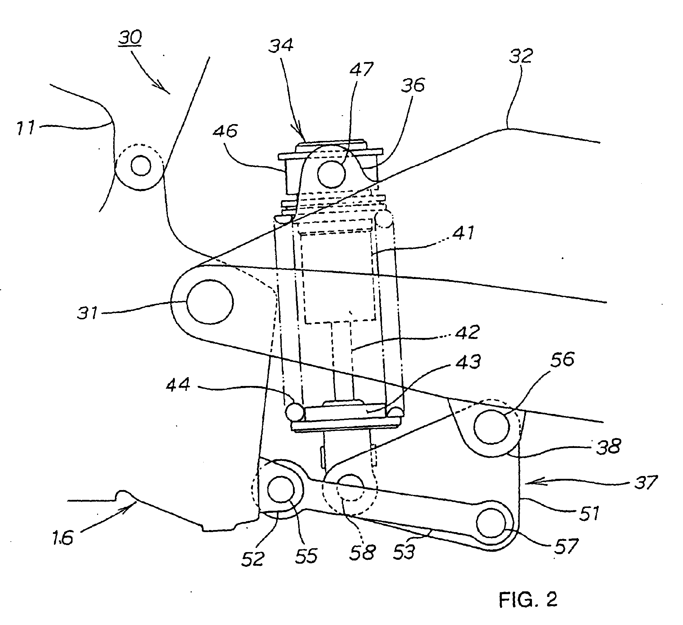

Fig. 2 is a side view showing a principal portion of the swing arm type suspension (the first embodiment) according to the present invention, in which the swing arm 32 is provided with an upper bracket 36 for mounting the cushion unit 34 at the upper portion thereof and with a lower bracket 38 for mounting the linking mechanism 37 at the lower portion thereof.

The cushion unit 34 comprises a cylinder portion 41, a piston rod 42 mounted on the piston that is not shown in the figure movably stored in the cylinder portion 41, a lower end mounting portion 43 provided at the end of the piston rod 42, and a suspension spring 44 interposed between the cylinder portion 41 and the lower end mounting portion 43, in which the upper end mounting portion 46 provided at the end of the cylinder portion 41 is mounted to the upper bracket 36 of the swing arm 32 so as to be capable of swinging motion, and the lower mounting portion 43 is mounted to the linking mechanism 37. The reference numeral 47 designates an upper swing shaft.

The linking mechanism 37 comprises a first link 51 of triangle shape in side view mounted on the lower bracket 38 of the swing arm 32 so as to be capable of swinging motion, and a second link 53 mounted to the first link 51 at one end so as to be capable of swinging motion and to the link mounting portion 52 provided at the lower portion of the power unit 32 so as to be capable of swinging motion. The reference numeral 55 designates a swing shaft on the side of the power unit.

The first link 51 is linked to the lower bracket 38 of the swing arm 32 by means of the first shaft 56, to the second link 52 by means of the second shaft 57, and to the lower end mounting portion 43 of the cushion unit 34 by means of the third shaft 58 so as to be capable of swinging motion respectively.

The power unit swing shaft 55 is a shaft located below the pivot shaft 31.

The operation of the swing arm type suspension 30 as described above will now be described.

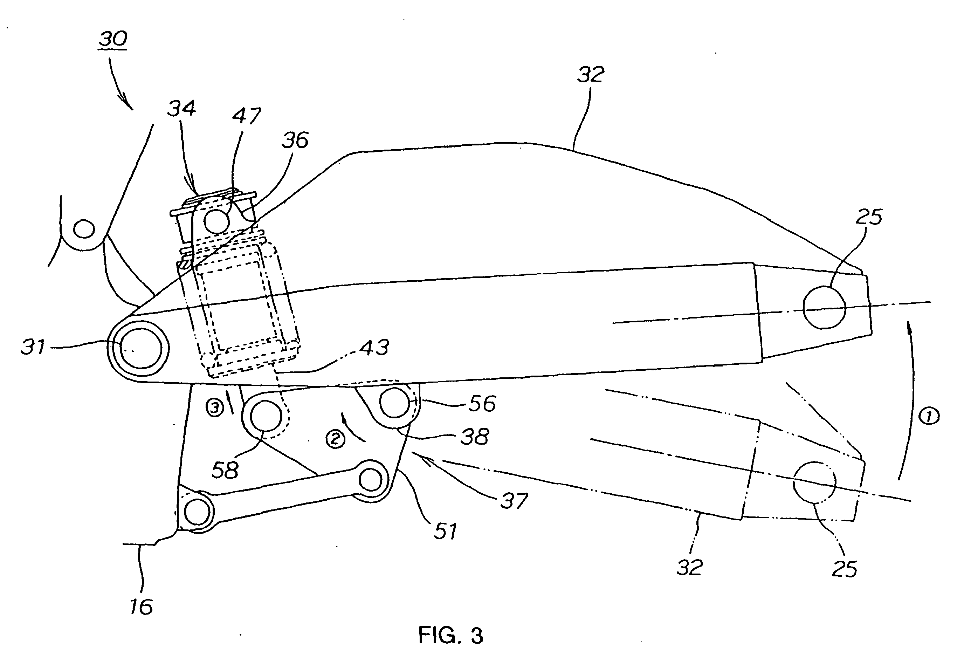

Fig. 3 is a first explanatory drawing showing an action of the swing arm type suspension (the first embodiment) according to the present invention.

In Fig. 1, for example, when the motorbike 10 rides over the projection on the road, and the rear wheel 33 moves upward with respect to the vehicle body side(the main frame 11 or the power unit 16), in Fig. 3, the swing arm 32 swings from the position shown by a phantom line to the position shown by a solid line upwardly about the pivot shaft 31 as shown by the arrow (1), and accordingly, the first link 51 swings clockwise about the first shaft 56 as shown by the arrow (2), and as a consequent, the lower end mounting portion 43 mounted on the third shaft 58 moves upward as shown by the arrow (3).

Therefore, the cushion unit 34 generates a damping force while being compressed and absorbs a shock.

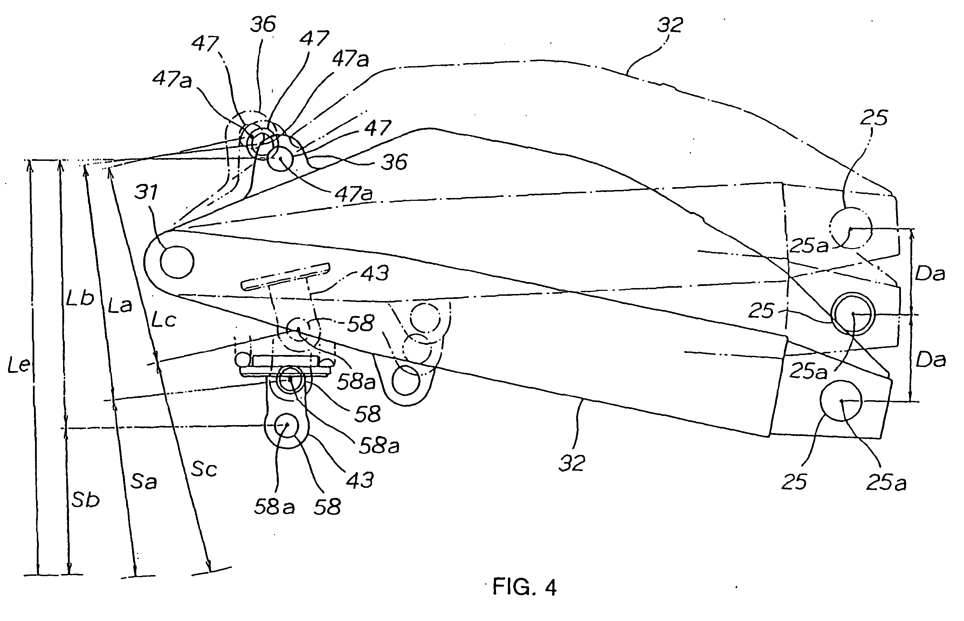

Fig. 4 is a second explanatory drawing showing an action of the swing arm type suspension (the first embodiment) according to the present invention, explaining the relation between the vertical distance of the movement of the rear wheel axle 25 of the swing arm 32 and the stroke length of the cushion unit 34. In the figure, the large double-circle designates the rear wheel axle 26, and the small double-circles designate the upper swing shaft 47 and the third shaft 58 respectively.

When the rear wheel axle 25 is at the position shown by the double-circle, or in a state in which the driver is riding on the motorbike, and the motorbike is in the halted state (without applying a force generated by acceleration or deceleration to the vehicle body) in the upright position (also called as "the position of ridden 1G state". This position is referred to as "ridden neutral position" hereinafter. It is also the ridden neutral position of the swing arm 32 and the rear wheel 33 (See Fig. 1)), the third shaft 58 that is a shaft linking the linking mechanism 37 (See Fig. 2) and the cushion unit 34 (See Fig. 2) comes to the position shown by the double-circle.

When the whole length of the cushion unit 34 (the distance between the shaft center 47a of the upper swing shaft 47 and the shaft center 58a of the third shaft 58, the same thing is applied herein after) at this moment is represented by La, and the whole length of the cushion unit 34 when it is extended to the fullest extent is represented by Le, the stroke length of the cushion unit 34 at the ridden neutral position will be Sa (that is; Sa=Le-La).

When the swing arm 32 swung from the ridden neutral position in the direction in which the cushion unit 34 (See Fig. 2) expands (swung downward), the swing arm 32, the upper bracket 36 of the swing arm 32, the lower end mounting portion 43 of the cushion unit 34, the third shaft 58, and the rear wheel axle 25 take the positions shown by the solid line, the distance of the movement of the rear wheel axle 25 in the direction in which the cushion unit 34 expands at this time (the distance of the movement of the shaft center 25a of the rear wheel axle 25) is represented by Da. The whole length of the cushion unit 34 at this time is represented by Lb and the stroke length thereof is represented by Sb. (That is; Sb=Le-Lb)

When the swing arm 32 is swung from the ridden neutral position in the direction in which the cushion unit 34 contracts (swung upward), the swing arm 32, the upper bracket 36 of the swing arm 32, the lower end mounting portion 43 of the cushion unit 34, the third shaft 58, and the rear wheel axle 25 take the positions shown by the dot dash line, and the distance of the movement of the rear wheel axle 25 in the direction in which the cushion unit 43 contracts at this time is the same as the distance of the movement described above and represented by Da. The whole length of the cushion unit 34 at this time is represented by Lc, and the stroke length is represented by Sc. (that is; Sc=Le-Lc).

In the swing arm type suspension 30 (See Fig. 2) of the present invention, by employing the linking mechanism 37 (See Fig. 2), (Sc-Sa)>(Sa-Sb) is satisfied.

In other words, the stroke length of the cushion unit 34 increases as the rear wheel axle 25 moves in the direction in which the cushion unit 34 contracts.

As a consequent, the speed of the movement of the piston of the cushion unit 34 increases, and thus a damping force generated at the cushion unit 34 increases.

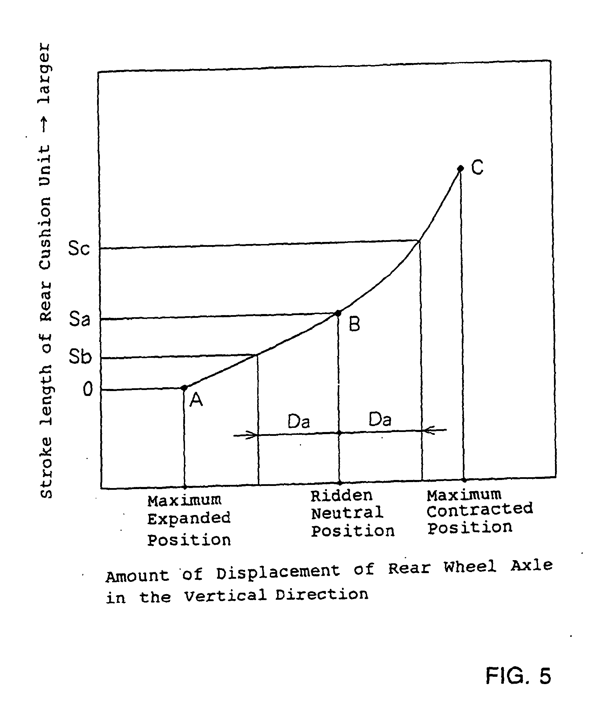

Fig 5 is a graph showing the relation between the amount of displacement of the rear wheel axle and the stroke length of the cushion unit in the swing arm type suspension (the first embodiment) of the present invention, in which the vertical axis represents the stroke length of the cushion unit, and the horizontal axis represents the amount of displacement of the rear wheel axle in the vertical direction (as regards the reference numerals and signs, see Fig. 2 and Fig. 3).

When the amount of displacement of the rear wheel axle 25 in the vertical direction is in the range between the maximum expanded position A of the cushion unit 34 and the ridden neutral position B, the stroke length of the cushion unit 34 increases almost linearly with the increase in the amount of displacement of the rear wheel axle 25 in the vertical direction.

When the amount of displacement of the rear wheel axle 25 in the vertical direction is in the range between the ridden neutral position B and the maximum contracted position C of the cushion unit 34, the proportion of increase in stroke length of the cushion unit 34 with respect to increase in the amount of displacement of the rear wheel axle 25 in the vertical direction gradually increases.

In this way, by employing the linking mechanism 37 that gradually increases the stroke length of the cushion unit 34 or increasing the stroke velocity of the cushion unit 34 when the rear wheel axle 25 is displaced from the ridden neutral position in the direction in which the cushion unit 34 contracts, a damping force generated at the cushion unit 34 may be increased to prevent the cushion unit 34 from coming into contact with the ground near the maximum contracted position of the cushion unit 34 and a damping force generated at the cushion unit 34 may be reduced to improve the ride quality near the ridden neutral position.

As is described in conjunction with Fig. 1 and Fig. 2, one end of the swing arm 32 is mounted to the pivot shaft 31 provided on the power unit 16 so as to be capable of swinging motion, and the rear wheel 33 is rotatably mounted to the other end of the swing arm 32, the upper end of the cushion unit 34 is mounted to the swing arm 32, and the lower end of the cushion unit 34 is connected to the power unit 16 by the power unit swing shaft 55 which is located below the pivot shaft 31 via the linking mechanism 37.

According to the related art, the upper end of the cushion unit is mounted to the vehicle body frame such as the seat frame or the like. In contrast to it, in the present invention according to Claim 1, the upper end of the cushion unit 34 is mounted to the swing arm 32. As a consequent, it is not necessary any more to provide a cross pipe on the vehicle body frame, or to provide the mounting member for mounting the upper end of the cushion unit, and thus the fixtures such as the electric components (buttery, control unit, etc.), the tool box, or the like may be mounted within the main frame 11, the seat frame 23, and the sub frame 24, whereby the physical capability of the vehicles specifically designed for off-road driving or for racing can be enhanced, and productivity of the motorbike 10 can be increased. In addition, concentration of the fixtures can realize downsizing of the motorbike 10 and expand the possibility of deign of the vehicle body frame such as the main frame 11, seat frame 23, sub frame 24, and so on.

One end of the swing arm 32 is mounted to the pivot shaft 31 provided on the power unit 16 so as to be capable of swinging motion, the rear wheel 33 is rotatably mounted to the other end of the swing arm 32, one end of the cushion unit 34 is mounted to the swing arm 32, the other end of the cushion unit 34 is mounted to the first link 51 provided as a first linking member linked to the swing arm 32, and the first link 51 is mounted to the second link 53 provided as a second linking member linked to the power unit 16.

When assembling the motorbike 10 in the production line, by assembling the cushion unit 34, the first and the second links 51, 53 and the rear wheel 33 to the swing arm 32 as a subassembly in the sub-line, the both ends of the cushion unit 34 can be positioned with respect to the swing arm 32. Therefore, to assemble the subassembly to the power unit 16 in the main line, the ends of the swing arm 32 and the second link 53 must simply be mounted to the power unit 16. As a consequent, the subassembly can easily be handled during transportation or assembly in comparison with the swing arm type suspension of the related art, whereby the subassembly can be transported easily and assembled in a simple manner.

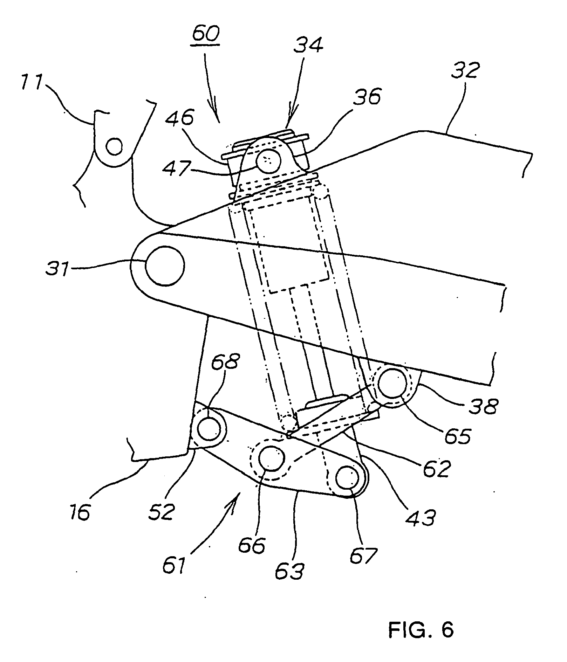

Fig. 6 is a side view of the principal portion of the swing arm type suspension (the second embodiment), and the same structures as the first embodiment shown in Fig. 2 is designated by the same reference numerals and signs and the detailed description is omitted.

The swing arm type suspension 60 comprises a pivot shaft 31, a swing arm 32, a cushion unit 34, and a linking mechanism 61, in which the upper end of the cushion unit 34 is mounted to the upper bracket 36 of the swing arm 32 so as to be capable of swinging motion, and the lower end of the cushion unit 34 is mounted to the linking mechanism 61 so as to be capable of swinging motion.

The linking mechanism 61 comprises a first link 62 one end of which is mounted to the lower bracket 38 of the swing arm 32 so as to be capable of swinging motion, and a second link 63 one end of which is mounted to the link mounting portion 52 of the power unit 16 so as to be capable of swinging motion, the other end of which is mounted to the lower end mounting portion 43 of the cushion unit 34 so as to be capable of swinging motion, and the center portion of which is mounted to the other end of the first link 62 so as to be capable of swinging motion. The reference numeral 65 designates a first shaft, the reference numeral 66 designates a second shaft, the reference numeral 67 designates a third shaft, and the reference numeral 68 designates a power unit swing shaft.

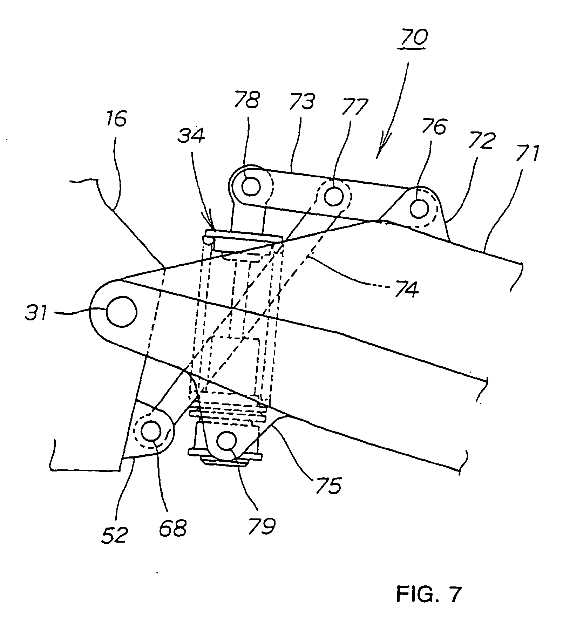

Fig. 7 is a side view of the principal portion of the swing arm type suspension (the third embodiment) according to the present invention, in which the same structures as the first and second embodiments are designated by the same reference numerals and signs, and the detailed description is omitted.

In the swing arm type suspension 70,a swing arm 71 is mounted to the power unit 16 so as to be capable of swinging motion, an upper bracket 72 is mounted to the upper portion of the swing arm 71, a first link 73 is mounted to the bracket 72 so as to be capable of swinging motion, one end of the cushion unit 34 is mounted to the end of the first link 73 so as to be capable of swinging motion, one end of the second link 74 is mounted to the central portion of the first link 73 so as to be capable of swinging motion, the lower end of the cushion unit 34 is mounted to the lower bracket 75 provided at the lower portion of the swing arm 71 so as to be capable of swinging motion, and the end of the second link 74 is mounted to the power unit 16 so as to be capable of swinging motion. The reference numeral 76 designates the first shaft, the reference numeral 77 designates the second shaft, the reference numeral 78 designates the third shaft, and the reference numeral 79 designates the fourth shaft.

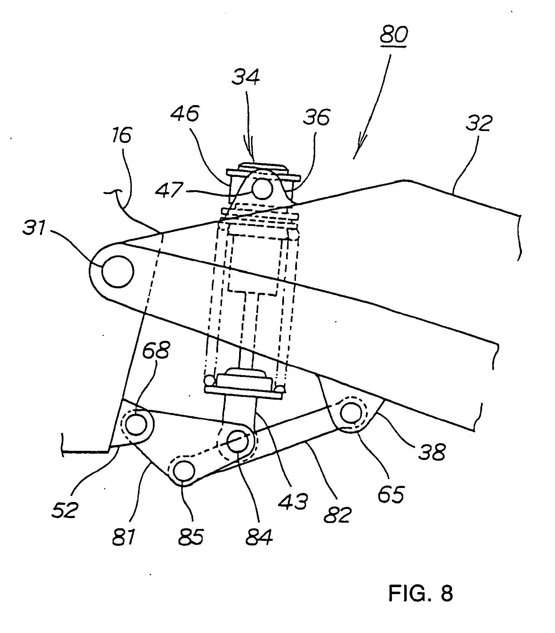

Fig. 8 is a side view of the principal portion of a swing arm type suspension (the forth embodiment), in which the same structures as the first to third embodiments are designated by the same reference numerals and signs, and the detailed description is omitted.

In the swing arm type suspension 80, one end of the swing arm 32 is mounted to the pivot shaft 31 provided on the power unit 16 as the vehicle body side so as to be capable of swinging motion, a rear wheel 33 (See Fig. 1) is rotatably mounted to the other end of the swing arm 32, one end of the cushion unit 34 is mounted to the swing arm 32 so as to be capable of swinging motion, the other end of the cushion unit 34 is mounted to the first link 81 linked to the power unit 16 so as to be capable of swinging motion, and the second link 82 connected to the swing arm 32 so as to be capable of swinging motion mounted to the first link 81 so as to be capable of swinging motion. The reference numeral 84 designates the second shaft, and the reference numeral 85 designates the third shaft.

The linking mechanism of the present invention, for example the linking mechanism 37 shown in Fig. 2 is constructed of two links 51, 53. However, it is not limited thereto, but it may be constructed of one or more than two links, as long as it stays within the scope of claim 1.

One end of a swing arm 32 is mounted to a pivot shaft 31 provided on a power unit 16 so as to be capable of swinging motion, a rear wheel is rotatably mounted to the other end of the wing arm 32, the upper end of a cushion unit 34 is mounted to the swing arm 32, and the lower end of the cushion unit 34 is linked to the power unit 16 by means of a power unit swing shaft 55 located at the position below the pivot shaft 31 via a linking mechanism 37.

It is not necessary any more to mount the upper end of the cushion unit to the vehicle body frame such as a seat frame or the like, and thus the fixtures such as electrical component can be concentrated in the vehicle body frame, whereby the physical capability of the vehicle can be enhanced and productivity of a vehicle can be improved. In addition, the vehicle can be downsized, and the possibility of design of a vehicle body frame can be expanded.

## Claims

1. A swing arm type suspension for vehicles, wherein one end of the swing arm (32) is mounted to a pivot shaft (31) provided on the side (16) of a vehicle body so as to be capable of swinging motion, a wheel (33) is rotatably mounted to the other end of the swing arm (32), one end of a cushion unit (34) is mounted to said swing arm (32), and the other end of the cushion unit (32) is mounted to a first linking member (51, 73), **characterized in that** the first linking member (51, 73) is linked to the swing arm, and the first linking member (51, 73) is mounted to a second linking member (53, 74) linked to the side (16) of the vehicle body.

## Patentansprüche

1. Schwingarmaufhängung für Fahrzeuge, worin ein Ende des Schwingarms (32) an einer seitens (16) eines Fahrzeugkörpers vorgesehenen Schwenkwelle (31) schwenkbeweglich gelagert ist, ein Rad (33) am anderen Ende des Schwingarms (32) drehbar gelagert ist, ein Ende einer Dämpfereinheit (34) an dem Schwingarm (32) gelagert ist und das andere Ende der Dämpfereinheit (32) an einem ersten Lenkerelement (51, 73) gelagert ist,
**dadurch gekennzeichnet, dass** erste Lenkerelement (51, 73) mit dem Schwingarm gekoppelt ist und das erste Lenkerelement (51, 73) an einem mit seitens (16) des Fahrzeugkörpers gekoppelten zweiten Lenkerelement (53, 74) gelagert ist.

## Revendications

1. Suspension du type à bras oscillant pour véhicules, dans laquelle une extrémité du bras oscillant (32) est montée sur un arbre de pivot (31) prévu sur le côté (16) d'un corps de véhicule de manière à être capable d'un mouvement d'oscillation, une roue (33) est montée en rotation sur l'autre extrémité du bras oscillant (32), une extrémité d'une unité d'amortissement (34) est montée sur ledit bras oscillant (32) et l'autre extrémité de l'unité d'amortissement (32) est montée sur un premier élément de liaison (51, 73), **caractérisée en ce que** le premier élément de liaison (51, 73) est relié au bras oscillant, et le premier élément de liaison (51, 73) est monté sur un second élément de liaison (53, 74) relié au côté (16) du corps du véhicule.
